**Europäisches Patentamt**

**European Patent Office**

**Office européen des brevets**

(19)

(11) Veröffentlichungsnummer : **0 380 485 B1**

(12)

# EUROPÄISCHE PATENTSCHRIFT

(45) Veröffentlichungstag der Patentschrift :
**15.04.92 Patentblatt 92/16**

(51) Int. Cl.⁵ : **B60R 21/32**

(21) Anmeldenummer : **88905360.9**

(22) Anmeldetag : **24.06.88**

(86) Internationale Anmeldenummer :
**PCT/DE88/00378**

(87) Internationale Veröffentlichungsnummer :
**WO 89/02377 23.03.89 Gazette 89/07**

(54) **VERFAHREN ZUM BETRIEB EINER SICHERHEITSEINRICHTUNG FÜR FAHRZEUGINSASSEN.**

(30) Priorität : **05.09.87 DE 3729785**

(43) Veröffentlichungstag der Anmeldung :
**08.08.90 Patentblatt 90/32**

(45) Bekanntmachung des Hinweises auf die
Patenterteilung :
**15.04.92 Patentblatt 92/16**

(84) Benannte Vertragsstaaten :
**FR GB IT SE**

(56) Entgegenhaltungen :
**EP-A- 0 027 747**
**FR-A- 2 267 221**
**US-A- 4 110 812**

(73) Patentinhaber : **ROBERT BOSCH GMBH**
**Postfach 30 02 20**
**W-7000 Stuttgart 30 (DE)**

(72) Erfinder : **BURGER, Wilfried**
**Bahnhofstrasse 97**
**W-7254 Hemmingen (DE)**
Erfinder : **NITSCHKE, Werner**
**Roseggerweg 14**
**W-7257 Ditzingen (DE)**
Erfinder : **TAUFER, Peter**
**Talstrasse 45**
**W-7253 Renningen 2 (DE)**
Erfinder : **WELLER, Hugo**
**Mörikestrasse 5**
**W-7141 Oberriexingen (DE)**

EP 0 380 485 B1

## Beschreibung

### Stand der Technik

Die Erfindung geht aus von einem Verfahren zum Betrieb einer Sicherheitseinrichtung für Fahrzeuginsassen nach der Gattung des Hauptanspruchs. Bei einer aus DE-A-28 51 333 bekannten Sicherheitseinrichtung ist aus Sicherheitsgründen eine Speichereinrichtung für elektrische Energie vorgesehen, um die Sicherheitseinrichtung vermittels elektrisch betätigbarer Auslösemittel auch dann noch betätigen zu können, wenn beispielsweise die Verbindung zur Hauptenergiequelle des Fahrzeuges unterbrochen ist. Als elektrisch betätigbares Auslösemittel werden in Sicherheitseinrichtungen häufig sogenannte Zündpillen verwendet, die bei Stromdurchfluß elektrisch erhitzt werden und dadurch eine pyrotechnische Reaktion in Gang setzen. Derartige Zündpillen neigen jedoch nach der Zündung zu Nebenschlüssen, die die begrenzte Energiereserve der Speichereinrichtung beanspruchen. Aufgrund der unerwünschten Entladung der Speichereinrichtung reicht die dann noch zur Verfügung stehende Energiemenge häufig nicht mehr aus, um weitere, für zeitlich aufeinanderfolgende Auslösung bestimmte Auslösemittel auch anderer Rückhaltemittel noch zu betätigen.

Aus DE-A-2 516 354 ist weiter ein Sicherheitssystem mit mehreren Zündendstufen bekannt, die durch beschleunigungsempfindliche Schaltmittel mit einer Stromversorgungseinrichtung verbindbar sind. In den Strompfaden, die die Zündendstufen mit der Stromversorgungseinrichtung verbinden, sind Sicherungsmittel, insbesondere Schmelzsicherungen, eingeschaltet, die bei Verschreiten der maximal zulässigen Stromstärke die jeweilige Zündendstufe von der Stromversorgungseinrichtung abtrennen. Diese Sicherungsmittel können eine Energieentnahme aus der Stromversorgungseinrichtung nicht unterbinden, wenn die Sollstromstärke, für die Sicherungsmittel ausgelegt sind, nicht erreicht wird. Dies ist beispielsweise dann der Fall, wenn bei einem Zündvorgang innerhalb der Zündungsendstufe ein endlicher Widerstand verbleibt, der jedoch noch einen unterhalb der Sollstromstärke liegenden Stromdurchgang zuläßt. Bei der bekannten Einrichtung kann somit nicht zuverlässig verhindert werden, daß die Stromversorgungseinrichtung belastende Leckströme verhindert werden. Dies ist insbesondere nachteilig, wenn die Stromversorgungseinrichtung aus einer Reserveenergiequelle in Form eines Kondensators besteht, in dem nur eine begrenzte Ladungsmenge gespeichert ist.

Mit der vorgeschlagenen Lösung wird angestrebt, die nachteiligen Folgen von Nebenschlüssen bei schon betätigten Auslösemitteln zu vermeiden, um so trotz einer begrenzten Energiereserve in der Speichereinrichtung noch zu betätigende Auslösemittel sicher auslösen zu können.

### Vorteile der Erfindung

Die erfindungsgemäße Lösung mit den kennzeichnenden Merkmalen des Hauptanspruchs hat den Vorteil, daß die Sicherheitseinrichtung für Fahrzeuginsassen außerordentlich zuverlässig arbeitet. Obwohl nämlich in der von der Hauptenergieversorgung des Fahrzeugs unabhängigen Speichereinrichtung für den Notfall lediglich eine begrenzte Energiemenge gespeichert ist, gelingt es mit der erfindungsgemäßen Lösung dennoch, die für die Aktivierung der Rückhaltemittel vorgesehenen Auslösemittel sicher zu betätigen. Dies wird hauptsächlich dadurch erreicht, daß die zur Betätigung jedes Auslösemittels notwendige Energiemenge präzise zugemessen wird. Sobald ein willkürlich vorgebbarer Energiegrenzwert überschritten ist, wird das zuvor jeweils betätigte Auslösemittel von der Speichereinrichtung abgetrennt. Auf diese Weise wird verhindert, daß beispielsweise durch einen entstandenen Nebenschluß die begrenzte Energiemenge unnötigerweise verbraucht wird. Es steht daher im Notfall noch ausreichend Energie zur Betätigung weiterer Auslösemittel zur Verfügung.

Durch die in den Unteransprüchen aufgeführten Maßnahmen sind vorteilhafte Weiterbildungen und Ausgestaltungen des im Hauptanspruchs angegebenen Verfahrens möglich. Weiter werden in den Unteransprüchen zur Durchführung des Verfahrens besonders geeignete Einrichtungen beschrieben.

### Zeichnung

Ausführungsbeispiele der Erfindung sind in der Zeichnung dargestellt und in der nachfolgenden Beschreibung näher erläutert. Es zeigen

Figur 1 ein Blockschaltbild einer Sicherheitseinrichtung für Fahrzeuginsassen zur Durchführung des erfindungsgemäßen Verfahrens,

Figur 2 in einem Diagramm die Darstellung der an der Speichereinrichtung anliegenden Spannung als Funktion der Zeit,

Figur 3 ein Ausführungsbeispiel der Sicherheitseinrichtung nach Figur 1 mit einem Transistor als Schaltelement und Figur 4 ein Funktionsdiagramm zur Erläuterung der Funktionsweise der Sicherheitseinrichtung nach Figur 1, bzw. Figur 3.

Beschreibung des Ausführungsbeispiels

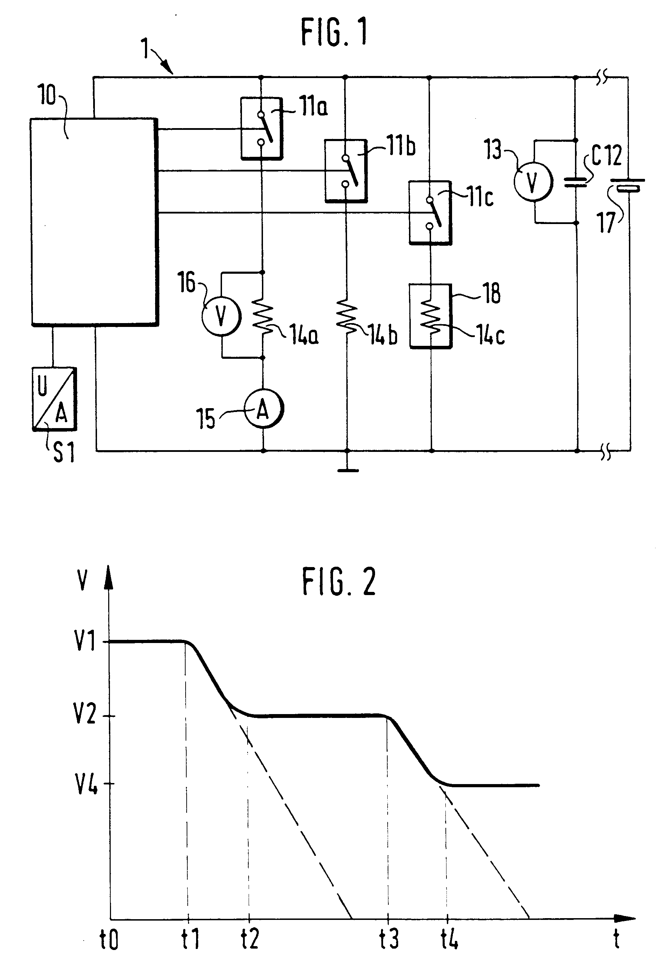

Eine Sicherheitseinrichtung 1 für Fahrzeuginsassen (Figur 1) besteht aus einem Beschleunigungsaufnehmer S1, an dessen Ausgang entweder ein beschleunigungsproportionales Signal erzeugt wird oder ein Signal, das erst bei Überschreiten einer festlegbaren Beschleunigungsschwelle entsteht. Dieses Signal wird einer Auswerteeinrichtung 10 zugeführt, in der das vom Beschleunigungsaufnehmer S1 abgegebene Signal daraufhin untersucht wird, ob ein Unfall vorliegt. Mit der Auswerteeinrichtung 10 verbunden und von dieser betätigbar sind Schaltelemente 11a, 11b, 11c, über die mit den vorgenannten Schaltelementen in Serie geschaltete Auslöseelemente 14a, 14b, 14c an eine Betriebsspannungsquelle 17 oder eine für den Notfall vorgesehene Speichereinrichtung für elektrische Energie C12 legbar sind. Die elektrisch betätigbaren Auslöseelemente 14a, 14b, 14c sind jeweils Rückhaltemitteln 18 zugeordnet. Bei den Rückhaltemitteln 18 handelt es sich um einen Luftsack, Gurtstraffer oder dergleichen. Bei Betätigung eines Schaltelementes 11a, 11b, 11c durch die Auswerteeinrichtung 10 wird ein Stromkreis geschlossen, dessen Bestandteil mindestens eines der Auslösemittel 14a, 14b, 14c ist. Bei diesen Auslösemitteln handelt es sich vorzugsweise um sogenannte Zündpillen, die z.B. bei Stromdurchfluß stark erhitzbar sind und dadurch die Zündung einer pyrotechnischen Zündkette einleiten.

Mittels der pyrotechnischen Zündkette wird schließlich auf pyrotechnischem Weg ein Gas erzeugt, das z.B. den Luftsack in sehr kurzer Zeit aufbläst. Aus Sicherheitsgründen ist neben der Betriebsspannungsquelle 17 (z.B. Fahrzeugbatterie) eine von dieser Betriebsspannungsquelle unabhängige Speichereinrichtung C12 vorgesehen, in der eine elektrische Energiereserve zur Betätigung der Auslösemittel 14a bis 14c für den Fall gespeichert wird, das beispielsweise infolge eines Unfalls die Verbindung der Sicherheitseinrichtung 1 zur Betriebsspannungsquelle 17 unterbrochen wird. Als Speichereinrichtung C12 wird in herkömmlichen Sicherheitseinrichtungen ein Kondensator verwendet, dessen Kapazitätswert jedoch begrenzt ist, da aus Platzgründen kein beliebig großes Bauvolumen zur Verfügung steht. In der Speichereinrichtung C12 ist daher nur eine begrenzte Energiemenge gespeichert.

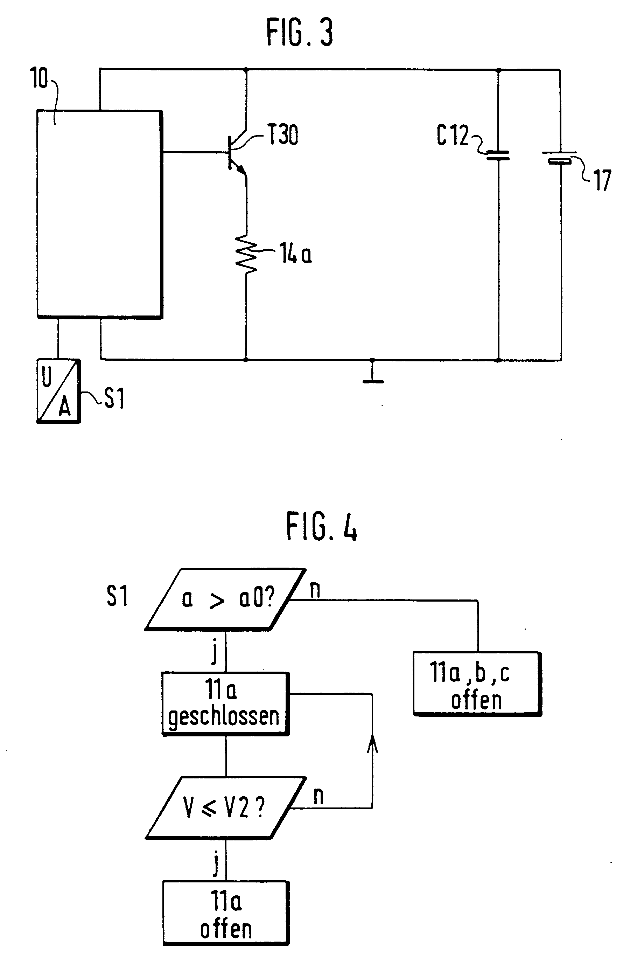

Bei herkömmlichen Sicherheitseinrichtungen mit Zündpillen als Auslösemittel hat sich nun als nachteilig herausgestellt, daß die Zündpillen zu Nebenschlüssen neigen. Das heißt, trotz der Aktivierung der Zündpille durch Stromerwärmung, die in der Regel eine Zerstörung der Zündpille und damit eine Unterbrechung des die Zündpille aktivierenden Stromkreises zur Folge hat, kann ein vergleichsweise geringer Restwiderstand erhalten bleiben, der einen geschlossenen Stromkreis aufrecht erhält und damit zu einem unerwünschten Abfluß von Energie aus der Speichereinrichtung C12 führt. Dies ist insbesondere dann außerordentlich nachteilig und für die Betriebssicherheit der Sicherheitseinrichtung abträglich, wenn in einem zeitlichen Abstand nacheinander mehrere Zündpillen aktiviert werden sollen, die je einzeln mehreren Rückhaltemitteln zugeordnet sind. Ein bestehender Nebenschluß einer zeitlich zuvor aktivierten Zündpille verbraucht in unerwünschter Weise die in der Speichereinrichtung C12 abgespeicherte Energie, so daß keine ausreichende Energiemenge für die nachfolgende Aktivierung weiterer Zündpillen zur Verfügung steht. Diesen Nachteil vermeidet die Erfindung nun auf einfache Weise dadurch, daß nach Betätigung jedes Auslösemittels die dem Auslösemittel zugefürte Energie gemessen wird, und daß nach Erreichen eines festlegbaren Energiegrenzwertes die Energiezufuhr zu den jeweils betätigten Auslösemittel unterbrochen wird. Diese Maßnahme wird jetzt im einzelnen anhand von Figur 1, Figur 2 und Figur 4 erläutert. Es wird angenommen, daß die Speichereinrichtung C12 auf ihre Sollspannung V1 aufgeladen sei und somit die minimal mögliche Energiemenge enthält. Weiter werde eine Notfallsituation angenommen, bei der die Sicherheitseinrichtung 1 von der Spannungsquelle 17 abgetrennt sei und somit nur die begrenzte Energiereserve in der Speichereinrichtung C12 zur Verfügung steht. Vom Beschleunigungsaufnehmer S1 wird die Beschleunigung erfaßt, der das Fahrzeug ausgesetzt ist und eine der Beschleunigung entsprechende Spannung erzeugt, die der Auswerteeinrichtung 10 zugeführt wird. Diese Auswerteeinrichtung entscheidet nach vorgebbaren Kriterien, ob ein Unfallereignis vorliegt oder nicht. Es wird angenommen, daß ein Unfallereignis dann vorliegt, wenn die vom Beschleunigungsaufnehmer S1 festgestellte Beschleunigung einen vorgegebenen Grenzwert a0 überschreitet. Solange dieser Grenzwert nicht erreicht ist, entscheidet die Auswerteeinrichtung 10, daß die Rückhaltemittel 18 nicht aktiviert werden müssen. Demzufolge bleiben die Schaltelemente 11a, 11b, 11c geöffnet und die Auslösemittel 14a, 14b, 14c werden nicht betätigt. Abgesehen von unvermeidlichen Energieverlusten in der Speichereinrichtung C12 bleibt somit die in der Speichereinrichtung C12 angesammelte Energie im wesentlichen erhalten. Sobald jedoch die Auswerteeinrichtung 10 feststellt, daß die vom Beschleunigungsaufnehmer S1 erfaßte Beschleunigung einen vorgegebenen Grenzwert a0 überschritten hat, wird das Schaltelement 11a von der Auswerteeinrichtung 10 angesteuert und geschlossen. Unter Einfluß eines Auslösemittels, nämlich der Zündpille 14a, wird somit zum Zeitpunkt t1 (Figur 2) ein geschlossener Stromkreis gebildet, der zu einem Stromfluß führt und die in der Speichereinrichtung 12 gespeicherte Energiemenge verringert. Der Stromfluß führt zu einer Erhitzung der Zündpille 14a, die wiederum, wie oben schon beschrieben, ggf. eine pyrotechnische Zündkette in Gang setzt und mittels pyrotechnisch erzeugter Gasmengen ein Rückhaltemittel 18, beispielsweise einen Luftsack, aufbläst. Wenn sich nun bei der Aktivierung der Zündpille 14a ein Nebenschluß bildet, würde ständig Energie aus der Speichereinrichtung C12 verbraucht. Dies würde sich an einem Absinken der an C12 gemessenen Spannung erkennen lassen. Diese würde - entsprechend der in Figur 2 strichliert gezeichneten Kurve - von einem Maximalwert V1 noch vor dem Zeitpunkt t3 nahezu auf Null sinken. Für die Auslösung der anderen Zündpillen 14b, 14c, wobei zunächst 14b zum Zeitpunkt t3 ausgelöst werden soll, stünde dann keine Energiereserve mehr zur Verfügung. Gemäß der Erfindung wird nun nach Aktivierung der Zündpille 14 zum Zeitpunkt t1 die der Zündpille 14a zugeführte elektrische Energie ermittelt. Sobald eine vorgebbare Energiemenge erreicht worden ist, diese wird zweckmäßig pragmatisch ermittelt, wird der Stromkreis durch erneute Betätigung des Schaltelementes 11a durch ein entsprechendes Signal der Auswerteeinrichtung 10 zum Zeitpunkt t2 erneut geöffnet. Dies hat zur Folge, daß die Energiezufuhr zur Zündpille 14a trotz eines dort gegebenenfalls gebildeten Nebenschlusses unterbrochen wird, so daß sich die Spannung an der Speichereinrichtung C12 bei einem Wert V2 stabilisiert. Es steht somit eine genügend große Energiereserve zur Verfügung, um zum Zeitpunkt t3 ein weiteres Auslösemittel, beispielsweise die Zündpille 14b, zu betätigen. Dazu wird durch besteuerung des Schaltelementes 11b wiederum ein geschlossener Stromkreis gebildet, der die vorerwähnte Zündpille 14 b einschließt. Nach hinreichender Energiezufuhr wird zum Zeitpunkt t4 durch erneutes besteuern des Schaltelements 11b dieses geöffnet und der Stromkreis unterbrochen, so daß sich zum Zeitpunkt t4 an der Speichereinrichtung eine Spannung V4 einstellt. In analoger Weise könnten noch weitere Auslöseelemente, wie beispielsweise die in Figur 1 noch dargestellte Zündpille 14c, betätigt werden. Als Maß für die dem jeweiligen Auslösemittel (Zündpille 14a, 14b, 14c) zugeführte Energiemenge kann nun auf einfache Weise die Spannung V an der Speichereinrichtung C12 dienen, die beispielsweise durch den in Figur 1 angedeuteten Spannungsmesser 13 erfaßt und von der Auswerteeinrichtung 10 verarbeitet werden kann. Die Auswerteeinrichtung 10 kann dafür an sich bekannte Komparatorschaltungen umfassen, die die an C12 gemessene Spannung mit vorgegebenen Referenzwerten, also beispielsweise den Spannungswerten V2 und V4 in Figur 2, vergleichen. Dieser Vorgang wird auch durch das Ablaufdiagramm nach Figur 4 verdeutlicht. Die Auswerteeinrichtung 10 erkennt am Ausgangssignal des Beschleunigungsaufnehmers S1 das Überschreiten eines vorgegebenen Beschleunigungsgrenzwerts a0. Daraufhin wird zur Betätigung des Auslösemittels 14a zunächst das Schaltelement 11a angesteuert und geschlossen. Durch den auf diese Weise geschlossenen Stromkreis wird dem Auslösemittel 14a elektrische Energie aus der Speichereinrichtung C12 zugeführt, wodurch die an C12 anstehende Spannung V vom zunächst vorhandenen Maximalwert V1 absinkt. Die Auswerteeinrichtung 10 prüft ständig, ob die an C12 anstehende Spannung den vorgegebenen Grenzwert V2 erreicht hat, bzw. diesen unterschreitet. Solange dies noch nicht der Fall ist, bleibt das Schaltelement 11a geschlossen. Wird das Erreichen des Spannungsgrenzwertes V2 festgestellt, erfolgt eine erneute besteuerung des Schaltelementes 11a, dieses wird geöffnet, und der geschlossene Stromkreis wird unterbrochen. Bis zum Zeitpunkt t3 steht an C12 die Spannung V2 an. Alternativ läßt sich die den Auslösemitteln zugeführte Energiemenge auch dadurch bestimmen, daß die an dem jeweiligen Auslösemittel 14a, 14b, 14c anliegende Spannung erfaßt und gleichzeitig der durch das Auslösemittel fließende Strom gemessen wird. Diese Maßnahme wird schematisch veranschaulicht durch die in Figur 1 im Zusammenhang mit der Zündpille 14a dargestellten Strommesser 15 und Spannungsmesser 16. In einer vorteilhaften Ausgestaltung der Einrichtung zur Durchführung des erfindungsgemäßen Verfahrens werden als Schaltelemente 11a, 11b, 11c Halbleiterschalter eingesetzt. Dies ist beispielhaft in Figur 3 verdeutlicht, in der zur Betätigung des Auslösemittels 14a ein Transistor T30 dient.

## Patentansprüche

1. Verfahren zum Betrieb einer Sicherheitseinrichtung für Fahrzeuginsassen mit einer Speichereinrichtung für elektrische Energie, sowie mit mehreren, mit der Speichereinrichtung verbindbaren Auslösemitteln für Rückhaltemittel, wie Luftsack, Gurtstraffer oder dergleichen, dadurch gekennzeichnet, daß nach Betätigung jedes Auslösemittels die dem Auslösemittel zugeführte Energie gemessen wird, und daß nach Erreichen eines festlegbaren Energiegrenzwertes die Energiezufuhr zu dem zuvor betätigten Auslösemittel unterbrochen wird.

2. Verfahren nach Anspruch 1, dadurch gekennzeichnet, daß zur Feststellung der einem Auslösemittel zugeführten Energiemenge die an der Speichereinrichtung (C12) anliegende Spannung (V) gemessen und mit einem vorgebbaren Sollwert (V2, V4) verglichen wird und daß bei Unterschreiten eines vorgebbaren Spannungssollwertes das zuvor betätigte Auslösemittel von der Speichereinrichtung (C12) abgetrennt wird.

3. Einrichtung zur Durchführung des Verfahrens nach einem der Ansprüche 1 und 2, dadurch gekennzeichnet, daß zur Sicherung von Fahrzeuginsassen Rückhaltemittel (18), wie beispielsweise Luftsack, Gurtstraffer oder dergleichen vorgesehen sind, wobei die Rückhaltemittel (18) vermittels von durch eine Auswerteeinrichtung (10) ansteuerbaren Schalteinrichtungen (11a, 11b, 11c) zur Bildung eines geschlossenen Stromkreises mit einer elektrische Energie speichernden Speichereinrichtung (C12) verbindbar sind.

4. Einrichtung nach Anspruch 3, dadurch gekennzeichnet, daß Mittel zur Erfassung der an der Speichereinrichtung (C12) anstehenden Spannung (V) und zum Vergleich dieser Spannung mit einem vorgebbaren Spannungsreferenzwert (V2, V4), vorgesehen sind.

5. Einrichtung nach Anspruch 3, dadurch gekennzeichnet, daß Mittel vorgesehen sind zur Erfassung der an den Auslösemitteln (14a, 14b, 14c) anstehenden Spannung und des durch die Auslösemittel (14a, 14b, 14c) fließenden Stroms, sowie Mittel zur Berechnung der elektrischen Energie aus den erfassten Spannungs-Stromwerten und zum Vergleich der berechneten Energiewerte mit einem vorgebbaren Energiegrenzwert.

## Claims

1. Method for operating a safety device for vehicle occupants having a storage device for electrical energy, as well as having a plurality of trigger means, which can be connected to the storage device, for restraining means, such as an air bag, belt tightener or the like, characterised in that after actuation of each trigger means the energy fed to the trigger means is measured, and in that after a determinable energy limit value is reached, the energy supply to the previously actuated trigger means is cut off.

2. Method according to Claim 1, characterised in that, in order to determine the amount of energy fed to a trigger means, the voltage (V) present at the storage device (C12) is measured and is compared with a predeterminable rated value (V2, V4) and in that, when a predeterminable rated voltage value is undershot, the previously actuated trigger means is disconnected from the storage device (C12).

3. Device for carrying out the method according to one of Claims 1 and 2, characterised in that, in order to protect vehicle occupants, restraining means (18) such as for example an air bag, belt tightener or the like are provided, in which case the restraining means (18) can be connected by means of switching devices (11a, 11b, 11c) which can be driven by an evaluation device (10) to a storage device (C12), which stores electrical energy, in order to form a closed circuit.

4. Device according to Claim 3, characterised in that means are provided for detecting the voltage (V) present at the storage device (C12) and for comparing this voltage with a predeterminable voltage reference value (V2, V4).

5. Device according to Claim 3, characterised in that means are provided for detecting the voltage present at the trigger means (14a, 14b, 14c) and the current flowing through the trigger means (14a, 14b, 14c), as well as means for calculating the electrical energy from the detected voltage/current values and for comparing the calculated energy values with a predeterminable energy limit value.

## Revendications

1. Procédé pour l'exploitation d'un dispositif de sécurité pour les passagers d'une voiture, avec un dispositif d'accumulation pour l'énergie électrique, ainsi qu'avec plusieurs moyens de déclenchement, susceptibles d'être reliés au dispositif d'accumulation, pour des moyens de retenue, tels un sac à air, un tendeur de courroie, ou des moyens analogues, procédé caractérisé en ce que, après l'actionnement de chaque moyen de déclenchement, l'énergie amenée à ce moyen de déclenchement est mesurée, et en ce que, après qu'une valeur limite, susceptible d'être fixée, de l'énergie ait été atteinte, la fourniture d'énergie au moyen de déclenchements précédemment actionnés, est interrompue.

2. Procédé selon la revendication 1, caractérisé en ce que pour fixer la quantité d'énergie amenée à un moyen de déclenchememt, la tension (V) s'appliquant au dispositif d'accumulation (C12) est mesurée et comparée avec une valeur de consigne susceptible d'être prédéfinie (V2, V4), et en ce que, en cas de franchissement vers le bas d'une valeur de consigne de la tension, susceptible d'être prédéfinie, le moyen de déclenchement précédemment actionné est séparé du dispositif d'accumulation (C12).

3. Dispositif pour la mise en oeuvre du procédé selon une des revendications 1 et 2, dispositif caractérisé en ce que pour la sécurité des passagers de la voiture, il est prévu des moyens de retenue (18), tels que par exemple un sac à air, un tendeur de courroie ou bien des moyens analogues, tandis que les moyens de retenue (18), par l'intermédiaire de dispositifs de commutation (11a, 11b, 11c) susceptibles d'être commandés par un dispositif d'exploitation (10), sont susceptibles d'être reliés à un dispositif d'accumulation (C12) accumulant de l'énergie électrique pour constituer un circuit fermé de courant.

4. Dispositif selon la revendication 3, caractérisé en ce qu'il est prévu des moyens pour détecter la tension (V) s'appliquant au dispositif d'accumulation (C12) et pour comparer cette tension avec une valeur de référence de la tension (V2, V4) susceptible d'être prédéfinie.

5. Dispositif selon la revendication 3, caractérisé en ce que des moyens sont prévus pour détecter la tension s'appliquant aux moyens de déclenchement (14a, 14b, 14c) et le courant circulant à travers les moyens de déclenchement (14a, 14b, 14c), ainsi que des moyens pour le calcul de l'énergie étectrique à partir des valeurs de tension et de courant ainsi détectées, et pour comparer les valeurs d'énergie ainsi calculées avec une valeur limite, susceptible d'être prédéfinie, de l'énergie.

FIG. 1

FIG. 2

# FIG. 3

# FIG. 4